# EUROPEAN PATENT APPLICATION

(11) **EP 4 040 361 A1**
(43) Date of publication of application: **10.08.2022**
(21) Application number: 22158342.0
(22) Date of filing: 05.12.2016
(51) Int. Cl.: G06Q 20/02, G06Q 20/34, G07F 19/00, G07G 1/00

(54) **A COMMUNICATION SYSTEM COMPRISING A LOCAL PAYMENT KERNEL**

(30) Priority: 07.12.2015 EP 15306948
(62) Divisional of application: 16808979.5
(71) Applicant: Thales Dis France SAS, 92190 Meudon (FR)
(72) Inventor: BAZIN, Pascal, 92190 Meudon (FR); LAMBERT, Jean, 92190 Meudon (FR); VIGNARD, Olivier, 92190 Meudon (FR); CASTILLO, Laurent, 92190 Meudon (FR)
(74) Representative: Quintero Romero, Manuel

(57) **Abstract**

This invention relates to a communication system (301) which is adapted to receive payment data from a local end-point (340) of a trusted channel and to communicate with a remote server (302) in order to carry out a payment transaction. The communication system comprises a local kernel (304) configured to implement a subset of functions of a payment kernel, the payment kernel functions being distributed between said local kernel (304) and a remote kernel (305) located on the remote server (302), the communication system (301) being further configured to transmit the enciphered payment data to a remote end-point (341) of the trusted channel located on the remote server (302) for said payment data to be deciphered and processed securely by the remote server (302).

## Description

### TECHNICAL FIELD

The present invention relates to a communication system comprising a local payment kernel and more particularly to mobile and remote payment.

### BACKGROUND OF THE INVENTION

For a customer to pay a purchase of goods or services to a merchant, electronic payment systems generally requires the use of an accepting device which is able to cooperate with a security token such as a smart card. The accepting device is a communication device such as a smartphone or a point-of-sale interaction terminal (POI) which is able to communicate with a remote server of a payment system.

The accepting device is in charge of the following tasks:
- capturing information from the Payer;
- merging this information with information related to the Payee and the very transaction (amount, timestamp, ...);
- processing this information to compute or verify various elements including Payer's credentials and payment certificates and to send the results to the payment system's entry points.

In accordance to the payment system's rules and requirements, especially with respect to security, EMV payment processes are usually considered having the highest reliability and security.

An accepting device may be a stand-alone one-in-all equipment for example a Point-of-Sale (POS) terminal. An accepting device can be also a distributed system, which can be the case for example for e-commerce or large retailers integrated systems.

Security is a key issue for those accepting devices, and the major payment schemes requirements do impact architectures, functionalities, and resulting prices. The requirements aim at protecting payment related objects, including the transaction's data, and their possible transmissions within the accepting device, or between the accepting device and the payment system's entry points. For face-to-face payment and traditional remote payments, rules are generally referring, in terms of security, to PCI (Payment Card Industry) rules corpus such as PCI DSS (Data Security Standard), POI (Point Of Interaction) and PTS (PIN Transaction Security).

Introducing mobile terminals as a part of the payment experience is one of the close future's main evolution in the payment area. This emphasizes some critical issues, as the hardware and software of mobile terminals is considered insecure, a fortiori comparing with closed, controlled, dedicated POS devices.

Many solutions compensate by using distributed cloud-based architectures, moving part of the security on servers. However, involving Internet data transfers between the accepting devices components add security concerns, as well as performance issues in a context where response times is critical for the players. In face to face payments, performing a payment shall not exceed a few seconds. For remote payments for which the use of a dedicated accepting device is unnecessary, slightly longer processing times could be tolerated, but the environment itself, with one or more distant servers exchanging, generates noticeable response times. In both cases, targeting very short processing times is mandatory as short processing times are clearly identified as strong differentiators between payment methods.

In theory, PCI or PCI-like requirements may be satisfied on fully local mobile environments, for instance adding PCI compliant devices to the handset. However, this would involve a cost level and deployment complexity neutralizing any advantage of mobile solutions compared to traditional dedicated POS. As soon as more complex processes are concerned, involving other players than the only issuer, keys property, liability, distribution and management become consequently more difficult. As a consequence, the increase in cost comes not only from the end user devices, but also from the increased complexity of integrating into the back end systems.

As a summary, mobile-based payment solutions have to balance three opposing constraints which are security, performances and cost. In other words, the challenge is to increase security and optimize the architecture of a payment system in an ecosystem involving merchants, acquirers and payment schemes. This is particularly critical for technologies using low cost accepting devices.

### SUMMARY OF THE INVENTION

According to the invention, there is provided a communication system which is adapted to receive payment data from a local end-point of a trusted channel and to communicate with a remote server in order to carry out a payment transaction, said communication system comprising a local kernel configured to implement a subset of functions of a payment kernel, the payment kernel functions being distributed between said local kernel and a remote kernel located on the remote server so that payment data are processed securely by the remote server and not by the communication system. The communication system is further configured to transmit the enciphered payment data to a remote end-point of the trusted channel located on the remote server for said payment data to be deciphered.

Advantageously, the split of a payment kernel between a local payment kernel and a remote payment kernel allows to delegate the execution of the most sensitive processes in term of security to a secure remote server of a payment system. This is particularly useful when the communication system, for example a mobile terminal, is not considered as secure enough.

In one embodiment, the payment kernel is compliant with the EMV standard.

In another embodiment, the communication system comprises a first component called local endpoint which is adapted to cooperate with a second component called remote endpoint in order to establish a trusted channel allowing to exchange data between the local kernel and the remote kernel, the exchanged data comprising the payment data as well as other types of data which are considered as sensitive, the trusted channel being established such that payment data is transferred enciphered. Additionally, the person skilled in the art will appreciate that the sharing of the functions of the payment kernel between the local and the remote kernel can be optimized in order to limit the number of messages exchanged between them and in consequence optimize the transmission bandwidth and the processing delays.

This trusted channel has the advantage to encrypt only a portion of the data to be used by the payment kernel. In particular, payment data that will be used by the remote kernel will be enciphered by the local endpoint located on the communication channel, transmitted towards the remote server, deciphered and then processed by the remote kernel. Other data used by the split payment kernel are not enciphered and can thus be processed by the local kernel and possibly the remote kernel without being deciphered. This is therefore beneficial for setting up the best compromise between security and performance.

According to one aspect of the invention, the local endpoint receives Application Protocol Data Units (APDU) and filters their content in order to identify payment data for it to be enciphered.

The communication system may also comprise an NFC reader configured to receive payment data from a payment smartcard supporting NFC technology.

As an example, the local end-point can be implemented in a secure element.

In one embodiment, the local kernel is implemented in a trusted zone, for example a trusted execution environment (TEE).

As an example, the communication system is a mobile terminal such as a smartphone.

In an alternative embodiment, the communication system is implemented by a mobile terminal cooperating with a card reader adapted to be interfaced with a smartcard in which the local endpoint of the trusted channel is implemented.

According to one embodiment, the payment data comprises at least one of the following pieces of information: a primary account number, a cryptogram generated according to the EMV standard, a PIN code.

The payment kernel functions which is distributed between the local kernel and the remote kernel may also support an off-line mode by implementing a local encrypted storage of payment data. For example, the local kernel is adapted to use either a secret key or a public key belonging to the remote kernel in order to cipher and store locally transaction data in an ongoing transaction log.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 illustrates a way to use a mobile terminal as an accepting device for a payment card in the context of remote payment;
- Figure 2 illustrates a way to implement face to face payment using a smartphone and a mobile POS terminal;
- Figure 3 and Figure 4 respectively provide a first and a second example of a payment system implementing a split EMV kernel and a filtering trusted channel and comprising an unsecure handset used as an accepting device;
- Figure 5 provides an example of functionality sharing between a local and a remote EMV kernel for the steps applied in an EMV transaction process.

### DETAILED DESCRIPTION

Herein under is considered the case in which the accepting device is implemented by a smart phone in cooperation with a smart card, as a payment device. However, it is only for exemplifying purposes and is not considered to reduce the scope of the present invention.

For example, the accepting device is a smartphone. It can also play the role of a payment device in case tokenisation is used for a given transaction. In that case, the token, for example a token PAN, can be memorized inside the smartphone.

In another example, the accepting device can be a POS terminal.

Throughout the figures, while the subject invention will now be described in detail with reference to the figures, it is done so in connection with the illustrative embodiments. It is intended that changes and modifications can be made to the described embodiments without departing from the true scope and spirit of the subject invention as defined by the appended claims.

In the following description, numerous specific details are set forth. However, it is understood that embodiments may be practiced without these specific details. In other instances, well known circuits, structures and techniques have not been shown in detail in order not to obscure the understanding of the description.

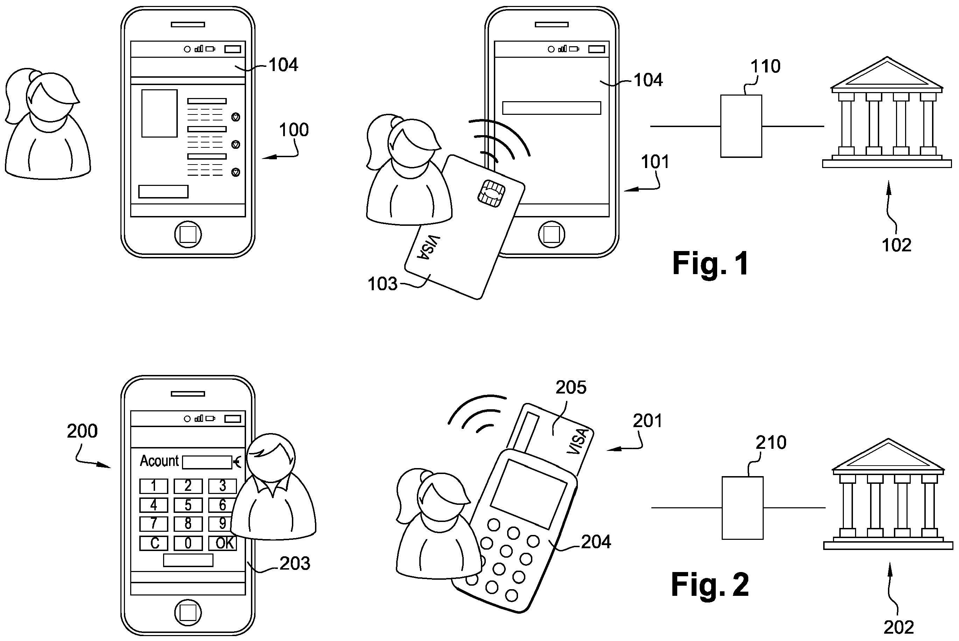

**Figure 1** illustrates a way to use a mobile terminal as an accepting device for a payment card in the context of remote payment.

In this example, the user interacts with a mobile terminal and accesses to a web browser or an application (in-app) to select 100 a product or a service.

In case he wants to buy it, he will use 101 its smartphone as an accepting device to initiate a remote payment procedure.Then, a dialog is initiated by the smartphone 104 acting as an accepting device. The payer is invited to select or present his payment means. As an example, the payer selects an NFC (Near Field Communication) payment card 103 and then present it to the accepting device 104. The card 103 and the smartphone 104 may exchange data using near field communication (NFC) technology. Payment data is also exchanged between the bank's payment system 102 and the mobile terminal 104 thanks to a remote server 110.

**Figure 2** illustrates a way to implement face to face payment using a smartphone and a mobile POS terminal.

The payment operation is initiated 200 by a smartphone 203 acting as an accepting device playing the role of a remote virtual POS. The accepting device 203 initiates a dialog with the customer. The customer is invited to select and/or present his payment means. For example, the customer presents his NFC card to the mobile terminal 203 or introduces 201 a contact payment card 205 inside a Bluetooth Low Energy (BLE) or Audio accepting device 204. Alternatively, the customer can activate an embedded payment secure element (eSE, UICC, pSD) or use payment tokens such as a token PAN and its associated CVV (Card Verification Value). A classical EMV payment scheme can then be applied and resulting transactions are transmitted to the clearing and settlement networks 202 via a remote server 210.

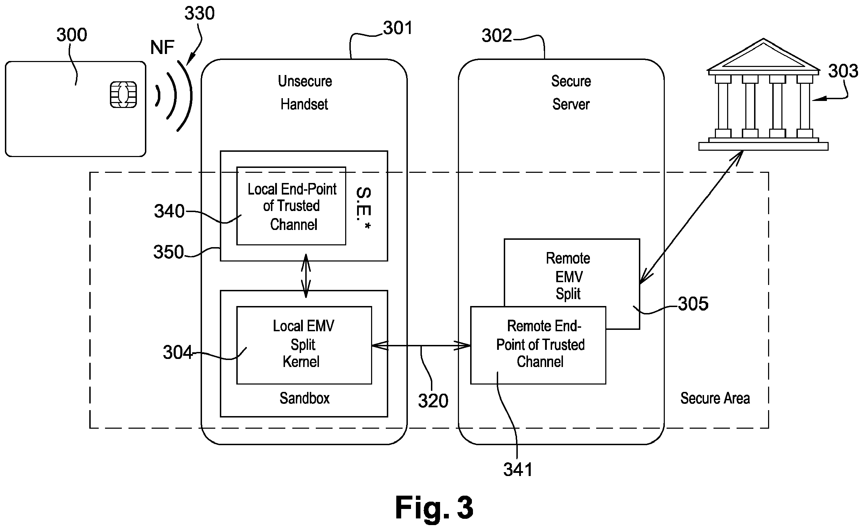

**Figure 3** is an example of a payment system involving an unsecure mobile device.

The invention implements mobile based configurations for face to face or remote payment that solve security, costs and performance.

In the following examples, two important features are implemented. The first feature corresponds to splitting payment functions in portable modules, one running on a remote server, the other locally in the mobile/unsecure handset or a secure device attached to it. In other words, the payment kernel is split into two parted called split-kernels.

The second feature is a filtering trusted channel which aim is to secure exchanges between those split modules whatever their implementations. In this description, this channel is designated as a Trusted Channel.

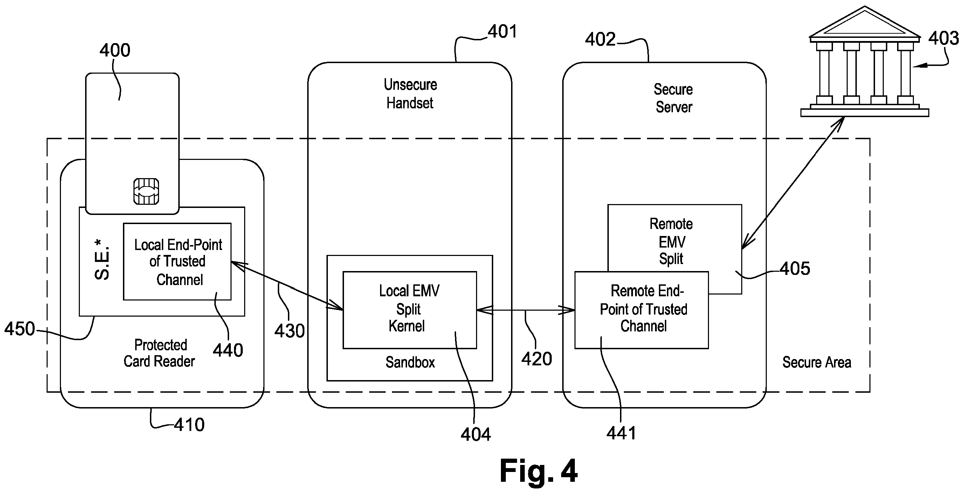

The two embodiments described hereafter with **Figure 3** and **Figure 4** are implementing these two features. However, the person skilled in the art will appreciate that the splitting of the payment kernel can be implemented with or without implementing the aforementioned trusted channel.

Therefore, by implementing at least one of those two main features, it is possible to optimize and to secure payment accepting devices independently from the commercial or operational context. The operational context corresponds for example to face to face, remote or in-app payment and the operational context corresponds for example to distributed devices or concentrated systems.

In the examples provided below, the EMV payment kernel is taken as a non-limitative example of payment kernel. However, alternative technologies can also be considered in the scope of this invention, for example proprietary payments means or closed loops.

**Figure 3** and **Figure 4** respectively provide a first and a second example of a payment system implementing a split EMV kernel and a filtering trusted channel and comprising an unsecure handset used as an accepting device.

In the first example, an NFC (Near Field Communication) payment card 300 is used as a payment device and can be presented near an unsecure handset 301, a smartphone in that case. The two devices can exchange 330 data needed for carrying out a transaction. The unsecure handset 301 is able to communicate 320 with a secure server 302 and the secure server 302 is able to communicate with a bank payment system 303.

In the second example, a protected card reader 410 is used to interface 430 a payment card 400 with an unsecure handset 401. The unsecure handset 401 is able to communicate 420 with a secure server 402 and the secure server 402 is able to communicate with a bank payment system 403.

In both cases, the EMV Kernel functions are distributed between two components called respectively remote kernel and local kernel. One is located on the remote server 302, 402 for better versatility and enhanced security, the second one is located in the handset 301, 401 for better performance and without security issues thanks to the Trusted Channel.

The EMV process is usually described as a twelve steps process, half of them being optional or not relevant to contactless payment. As already underlined, these are distributed between the local and remote kernels.

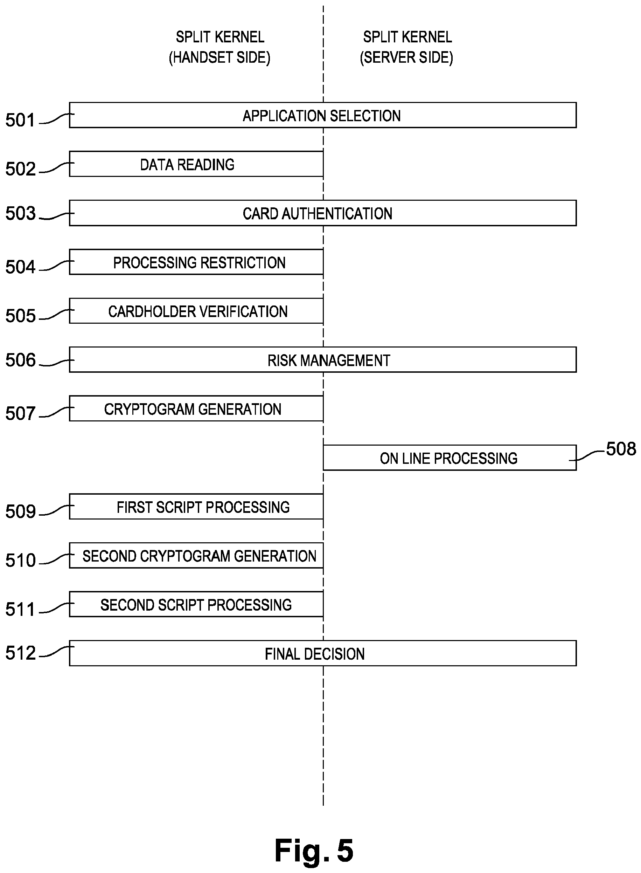

**Figure 5** provides an example of functionality sharing between two split EMV kernels for the steps applied in an EMV transaction process.

The first step 501 corresponds to the "Application Selection". It is initiated remotely, that is to say by the split kernel 305, 405 of the server 302, 402, and deployed locally, that is to say on the split kernel 305, 405 of the unsecure handset 301, 401.

The second step 502 Data reading is implemented locally 304, 404.

The third step 503 is Card Authentication and is implemented locally 304, 404 and then remotely 305, 405 if required.

The fourth step 504 is called Processing Restriction and is implemented locally 304, 404.

The fifth step 505 is called Cardholder verification and is implemented locally 304, 404.

The sixth step 506 is called Risk Management and is implemented locally 304, 404 and then remotely 305, 405 if required.

The seventh step 507 is called First Cryptogram Generation and is implemented locally 304, 404.

The eighth step 508 is called Online Processing and is implemented remotely 305, 405.

The ninth step 509 is called First Script Processing and is implemented locally 304, 404.

The tenth step 510 is called Second Cryptogram Generation and is implemented locally 304, 404.

The eleventh step 511 is called Second Script Processing and is implemented locally 304, 404.

The twelfth step 512 is called Final Decision and is implemented locally 304, 404 and then remotely 305, 405 if required.

With this split between the handset 301, 401 and the server, there is no payment information that needs to be stored locally in the mobile handset. The remote server is the one taking all risks based decisions, so that the achieved level of security level is high. Further, most performance demanding processes are done locally so that performances are optimized.

The local EMV kernel 304, 404 can be implemented in multiple environments, depending on the overall security target.

As an example, it can be implemented in a software application on the mobile handset. In another example, it can be implemented in a trusted zone, for example a Trusted Execution Environment (TEE) of the mobile handset, in order to protect payment data during processing. Alternatively, it can be implemented in a secure element (SE) embedded or inserted in the mobile handset, using for that purpose a Universal Integrated Circuit Card (UICC) or an embedded secure element (eSE). In this configuration, payment data can be efficiently protected during processing and transaction data can be securely stored. Advantageously, these examples are phone based and therefore do not require additional hardware investments for the end-user. They all fit in the existing EMV infrastructure and do not require additional management nor back end systems to operate, highly reducing the implementation cost.

In another example, the split kernel can be implemented in a separate device connected to the mobile device 401. This allows having a certifiable environment for processing.

EMV supports an offline mode, typically skipping steps 508-511 of the process, which enables doing a transaction without a network connection. The transaction data is then stored locally on the POS until a later operation called remittance or capture is performed once network connectivity is back up.

In one embodiment, the split kernel supports the aforementioned off-line mode by implementing a local encrypted storage of payment data. In this embodiment, the local kernel has either a secret key or a public key belonging to the remote kernel part that is used to cipher and store locally the transaction data in an ongoing transaction log. The payment data corresponds for example to one or several pieces of information such as the Primary Account Number (PAN), the amount of the transaction, the currency used for the transaction and a cryptogram generated during the transaction. During capture, this log is sent encrypted over the trusted channel to the remote kernel. Advantageously, the remote kernel can trust the source of the data and the remote kernel in the only one that can decrypt and see the transaction data.

Another important aspect of the technology presented in this description is the use of a trusted channel. The trusted channel can be seen as a set of components 340, 341, 440, 441 that links securely other components of the implementation 304, 305, 404, 405, 410 and gives them the ability to be relocated according to the use case and hardware capabilities. It can be implemented in software or by using dedicated hardware and covers methods and processes allowing securing data and commands transfers between each component of the payment mobile based accepting devices. Some of the components allowing the implementation of the trusted channel are implemented for example in a secure element 350, 450 of the accepting devices used in the payment system.

The trusted channel may be implemented by following a process derived of standard secure channel principles, as for example in Global Platform standard for which data is protected between two endpoints.

As an example, one endpoint designated as the remote endpoint is located on the remote server 302, 402 and the other one 340, 440 designated as the local endpoint can be located upstream from the local kernel and as close as possible of the components implementing the card reader. One aim of the trusted channel is to secure the communication 320, 420 between the local 304, 404 and remote 305, 405 kernels.

In the example illustrated with **Figure** 3, the card reader is an NFC reader implemented inside the mobile handset 301. Alternatively, in the example illustrated with **Figure 4****,** the card reader 410 corresponds to a device separated from the mobile handset and implemented a contact interface with a smartcard 400 and based for example on ISO 7816 standard. In that case, the local endpoint of the trusted channel can be implemented on the card reader 410.

It may be implemented with various cryptographic primitives (symmetric or asymmetric). The trusted channel adds features which diverge from the standard secure channels commonly used.

An important aspect of the trusted channel is that only the sensitive data are ciphered in order to allow the EMV kernel to operate locally with the necessary EMV data in clear. According to one embodiment, the Primary Account Number, PIN code and the service code are considered as sensitive data and are therefore ciphered.

The trusted channel can also use a temporary session key set for encryption. Sensitive data are ciphered and clear data are signed both ways and with different keys between encryption and signature.

According to another aspect, PIN block is encrypted with a dedicated key.

When the trusted channel is implemented, every Application Protocol Data Unit (APDU) exchange including commands and responses goes through the filtering process inside of the local kernel that parses the data to be ciphered or not.

Advantageously, no sensitive data stays in clear outside of the local kernel.

In case offline payment is supported by the implementation, transaction storage goes through the same security protocol while data are waiting for the scheduled transmission.

As a summary, the trusted channel is based on three components. A cryptographic key set which is securely stored, a back-office component 341, 441 to handle the remote end-point of the channel and a terminal component 340, 440 to handle the local end-point of the channel.

The local end-point of the trusted channel, like the local kernel, can be implemented in multiple secure environments, not necessarily in the same place as the local kernel, for example:
- an external card reader;
- a Secure Element in the phone (UICC or eSE);
- a Trusted Execution Environment;
- for low cost, low risk environments, in an application in the phone.

The invention can be also defined according to the following clauses:
Clause 1.- A communication system (301, 401) which is adapted to receive enciphered payment data (300, 400) from a local end-point (340, 440) of a trusted channel and to communicate with a remote server (302, 402) in order to carry out a payment transaction, said communication system (301, 401) comprising a local kernel (304, 404) configured to implement a subset of functions of a payment kernel, the payment kernel functions being distributed between said local kernel (304, 404) and a remote kernel (305, 405) located on the remote server (302, 402), the communication system (301, 401) being further configured to transmit the enciphered payment data to a remote end-point (341, 441) of the trusted channel located on the remote server (302, 402) for said payment data to be deciphered and processed securely by the remote server (302, 402).
Clause 2.- A communication system (301, 401) according to clause 1, wherein the payment kernel is compliant with the EMV standard.
Clause 3.- A communication system (301, 401) according to any of the preceding clauses, wherein the trusted channel is established such that payment data are transferred signed.
Clause 4.- A communication system (301, 401) according to any of the preceding clauses, wherein the local endpoint (341, 441) receives Application Protocol Data Units and filters their content in order to identify payment data for it to be enciphered.
Clause 5.- A communication system (301, 401) according to any of the preceding clauses comprising a NFC reader configured to receive payment data from a payment smartcard (300, 400) supporting NFC (330, 430) technology.
Clause 6.- A communication system (301, 401) according to any of the preceding clauses, wherein the local end-point (340, 440) is implemented in a secure element (350, 450).
Clause 7.- A communication system (301, 401) according to any of the preceding clauses, wherein the local kernel (304, 404) is implemented in a trusted zone such as a Trusted Execution Environment.
Clause 8.- A communication system (301, 401) according to any of the preceding clauses implemented by a mobile terminal such as a smartphone.
Clause 9.- A communication system (301, 401) according to any of the preceding clauses implemented by a mobile terminal (401) cooperating (430) with a card reader (450) adapted to be interfaced with a smartcard (400) in which the local endpoint (440) of the trusted channel is implemented.
Clause 10.- A communication system (301, 401) according to any of the preceding clauses, wherein the payment data comprises at least one of the following pieces of information: a primary account number, a cryptogram generated according to the EMV standard, a PIN code.
Clause 11.- A communication system (301, 401) according to any of the preceding clauses, wherein the payment kernel functions distributed between the local kernel (304, 404) and the remote kernel (305, 405) supports an off-line mode by implementing a local encrypted storage of payment data.
Clause 12.- A communication system (301, 401) according to any of the preceding clauses, wherein the local kernel (304, 404) is adapted to use either a secret key or a public key belonging to the remote kernel (305, 405) in order to cipher and store locally transaction data in an ongoing transaction log.

## Claims

1. A communication system (301, 401) which is adapted to receive payment data (300, 400) from a local end-point (340, 440) of a trusted channel and to communicate with a remote server (302, 402) in order to carry out a payment transaction, wherein
said communication system (301, 401) further comprises a local kernel (304, 404) configured to implement a subset of functions of a payment kernel,
the payment kernel functions are distributed between said local kernel (304, 404) and a remote kernel (305, 405) located on the remote server (302, 402) so that payment data are processed securely by the remote server and not by the communication system,
the local end-point comprises a filter configured to identify payment data for it to be enciphered;
the communication system (301, 401) is further configured to transmit the enciphered payment data to a remote end-point (341, 441) of the trusted channel located on the remote server (302, 402) for said payment data to be deciphered and processed securely by the remote server (302, 402); and
the local kernel being also configured to receive and process the unenciphered data and to communicate it to the remote kernel.

2. A communication system (301, 401) according to claim 1, wherein the payment kernel is compliant with the EMV standard.

3. A communication system (301, 401) according to any of the preceding claims, wherein the trusted channel is established such that payment data are transferred signed.

4. A communication system (301, 401) according to any of the preceding claims, wherein the local endpoint (341, 441) receives Application Protocol Data Units and filters their content in order to identify payment data for it to be enciphered.

5. A communication system (301, 401) according to any of the preceding claims comprising a NFC reader configured to receive payment data from a payment smartcard (300, 400) supporting NFC (330, 430). technology.

6. A communication system (301, 401) according to any of the preceding claims, wherein the local end-point (340, 440) is implemented in a secure element (350, 450).

7. A communication system (301, 401) according to any of the preceding claims, wherein the local kernel (304, 404) is implemented in a trusted zone such as a Trusted Execution Environment.

8. A communication system (301, 401) according to any of the preceding claims implemented by a mobile terminal such as a smartphone. Smartphone.

9. A communication system (301, 401) according to any of the preceding claims implemented by a mobile terminal (401) cooperating (430) with a card reader (450) adapted to be interfaced with a smartcard (400) in which the local endpoint (440) of the trusted channel is implemented.

10. A communication system (301, 401) according to any of the preceding claims, wherein the payment data comprises at least one of the following pieces of information: a primary account number, a cryptogram generated according to the EMV standard, a PIN code.

11. A communication system (301, 401) according to any of the preceding claims, wherein the payment kernel functions distributed between the local kernel (304, 404) and the remote kernel (305, 405) supports an off-line mode by implementing a local encrypted storage of payment data.

12. A communication system (301, 401) according to claim 13, wherein the local kernel (304, 404) is adapted to use either a secret key or a public key belonging to the remote kernel (305, 405) in order to cipher and store locally transaction data in an ongoing transaction log.
